# EUROPÄISCHE PATENTANMELDUNG

(11) **EP 1 190 904 A2**
(43) Veröffentlichungstag der Anmeldung: **27.03.2002**
(21) Anmeldenummer: 01122412.8
(22) Anmeldetag: 20.09.2001
(51) Int. Cl.: B60Q 3/02

(54) **Leseleuchte für einen Fahrzeuginnenraum**

(30) Priorität: 20.09.2000 DE 10046840
(71) Anmelder: Goodrich Corporation, Charlotte, North Carolina 28217-3022 (US)
(72) Erfinder: Becker, Stefan, Dipl.-Ing., 59590 Geseke (DE); Hessling von Heimendahl, Andre, Dipl.-Ing., 59555 Lippstadt (DE); Schulz, Rico, Dipl.-Ing., 59555 Lippstadt (DE)
(74) Vertreter: Hilleringmann, Jochen, Dipl.-Ing.

(57) **Zusammenfassung**

Leseleuchte (1) für einen Fahrzeuginnenraum mit einer in einem Leuchtengehäuse (2) angeordneten Lichtquelle (3) und einer der Lichtquelle (3) in Abstrahlrichtung vorgelagerten eine Gehäuseöffnung abdeckenden Linse (5), wobei die Linse als zweite Linse (5) eines Linsensystems ausgebildet ist, dass zwischen Lichtquelle (3) und zweiter Linse (5) eine erste Linse (4) aufweist.

## Beschreibung

Die Erfindung betrifft eine Leseleuchte für einen Fahrzeuginnenraum mit einer in einem Leuchtengehäuse angeordneten Lichtquelle und einer der Lichtquelle in Abstrahlrichtung vorgelagerten Linse.

Aus der DE 25 07 857 A1 ist eine Leseleuchte bzw. eine Sitzplatzbeleuchtung für Fahrzeuge bekannt, die ein Leuchtengehäuse aufweist, das im Wesentlichen aus einem kugelförmigen Leuchtenkörper besteht, der verschwenkbar in einer Aufnahme des Leuchtengehäuse gelagert ist. Der Leuchtenkörper weist eine Lichtquelle in Form einer Glühlampe auf, die von einem Reflektor umgeben ist. In Abstrahlrichtung ist der Lichtquelle eine Linse vorgelagert, die eine Gehäuseöffnung im Leuchtenkörper abdeckt.

Nachteilig bei der bekannten Leseleuchte ist, dass sie nicht für Lichtquellen mit geringen Öffnungswinkeln, wie beispielsweise Leuchtdioden, geeignet ist. Auch ist sie nicht geeignet, um einen Lichtkegel mit geringem Öffnungswinkel zu erzeugen, da ihre Bautiefe unerwünscht groß werden würde.

Aufgabe der vorliegenden Erfindung ist es daher, die bekannte Leseleuchte so zu verbessern, dass sie auch für die Verwendung von Leuchtdioden als Lichtquelle und zur Erzeugung kleiner Lichtkegel verwendbar ist.

Diese Aufgabe wird erfindungsgemäß in Verbindung mit dem Oberbegriff des Anspruches 1 dadurch gelöst, dass die Linse als zweite Linse eines Linsensystems ausgebildet ist, das zwischen der Lichtquelle und der zweiten Linse eine erste Linse aufweist.

Durch die Verwendung des aus einer ersten und einer zweiten Linse bestehenden Linsensystems lassen sich auch Lichtquellen mit relativ kleinen Öffnungswinkeln bzw. kleinen Lichtaustritten mit relativ geringer Bautiefe verwirklichen. Zudem führt das Linsensystem zu einer homogenen Ausleuchtung der Beleuchtungsebene. Bei Verwendung einer Leuchtdiode, die Arrays mit einzelnen sogenannten Dies aufweist, werden die Dies in der Beleuchtungsebene nicht unerwünscht scharf abgebildet, was zu einer inhomogenen Lichtverteilung in der Beleuchtungsebene führen würde.

Gemäß einer bevorzugten Ausführungsform der Erfindung ist die Lichtquelle als eine Leuchtdiode ausgebildet, die etwa im Brennpunkt der ersten Linse, die als Sammellinse ausgebildet ist, angeordnet ist. Die erste Linse ist ihrerseits dabei im Brennpunkt der zweiten Linse angeordnet. Die erste Linse bzw. ihre Fassung bildet dabei die Öffnungs- oder Aperturblende und die zweite Linse bzw. ihre Fassung bildet die Feldblende. Diese Anordnung führt zu einer gleichmäßigen Lichtverteilung bzw. Lichtintensität über die beleuchtete Fläche.

Nach einer weiteren bevorzugten Ausführungsform der Erfindung ist die Lichtquelle bzw. die Leuchtdiode zwischen dem Brennpunkt der ersten Linse und der ersten Linse angeordnet.

Dadurch, dass der Brennpunkt der ersten Linse entgegengesetzt zur Abstrahlrichtung hinter der Leuchtdiode bzw. deren Blendenebene angeordnet ist, ergibt sich eine kurze Bauweise der Leseleuchte. Die Anordnung des Brennpunktes hinter der Blendenebene führt zudem zu einer virtuellen Objektebene, was eine vergrößerte Öffnungs- bzw. Aperturblende zur Folge hat, was wiederum zu einer Effizienzsteigerung des Lichtsystems führt. Die Lichtverteilung der beleuchteten Fläche kann dabei im Zentrum ihr Maximum aufweisen und zum Rande hin abnehmend ausgebildet sein.

Gemäß einer weiteren bevorzugten Ausführungsform der Erfindung ist die zweite Linse als eine Fresnellinse ausgebildet. Durch die Verwendung einer Fresnellinse lässt sich eine gleichmäßige Lichtintensität der beleuchteten Fläche erzielen. Es ist grundsätzlich aber auch möglich, die zweite Linse als Bikonvexlinse auszubilden.

Durch die Verwendung von Leuchtdioden als Lichtquelle lässt sich eine hohe Lebensdauer der Lichtquelle bei geringer elektrischer Leistung verwirklichen.

Zudem ist bei Verwendung von Leuchtdioden ein kleiner Lichtaustritt zu realisieren.

Gemäß einer weiteren bevorzugten Ausführungsform der Erfindung weist die Leuchtdiode ein Leuchtengehäuse mit zwei Pins bzw. zwei Anschlussstiften als elektrischen Kontakten auf, über die ein Stecker zur elektrischen Kontaktierung steckbar ist.

Dadurch, dass die Pins bzw. Anschlussstifte zur direkten elektrischen Kontaktierung dienen, wird die elektrische Kontaktierung über einen Stecker erheblich vereinfacht.

Nach einer weiteren bevorzugten Ausführungsform der Erfindung dichtet der Stecker zur Kontaktierung der Leuchtdiode zugleich das Leuchtengehäuse an seiner Rückseite ab.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

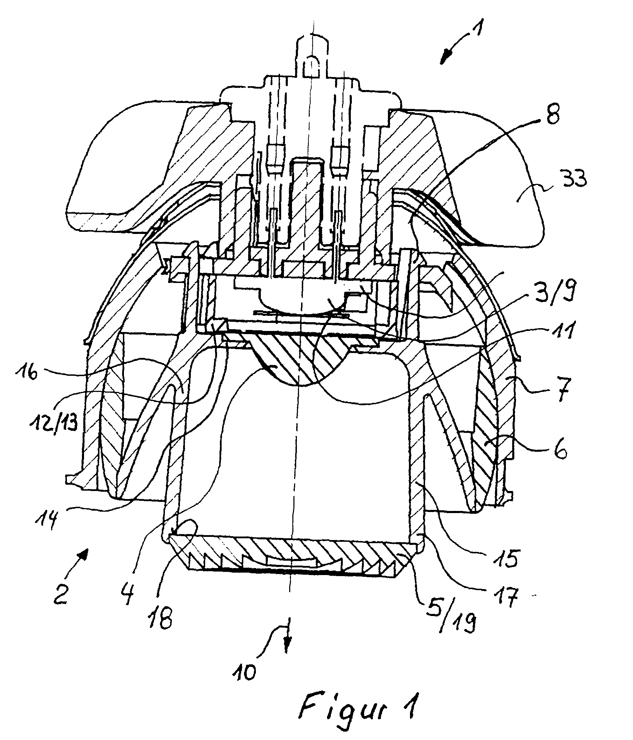

- Figur 1:: Eine Seitenansicht einer Leseleuchte im Schnitt mit einer Fresnellinse als zweiter Linse,

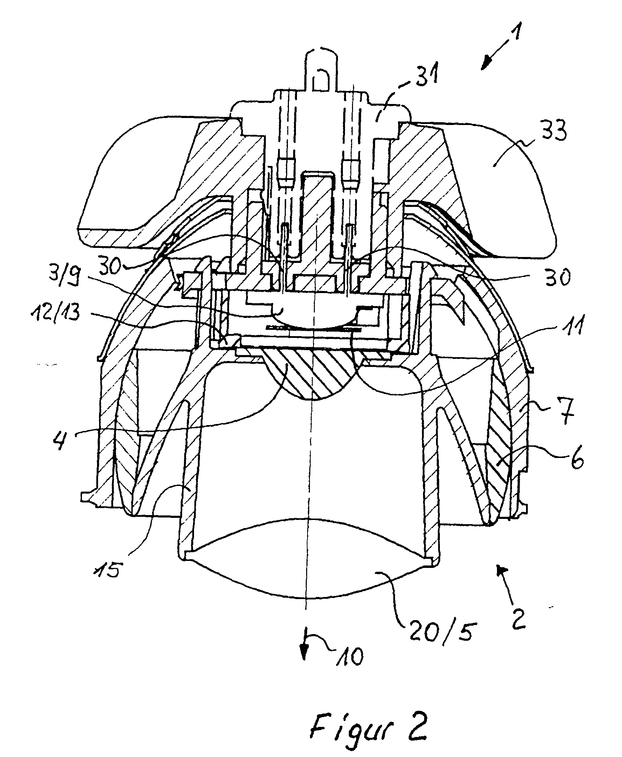

- Figur 2:: eine Seitenansicht einer Leseleuchte im Schnitt mit einer Bikonvexlinse als zweiter Linse,

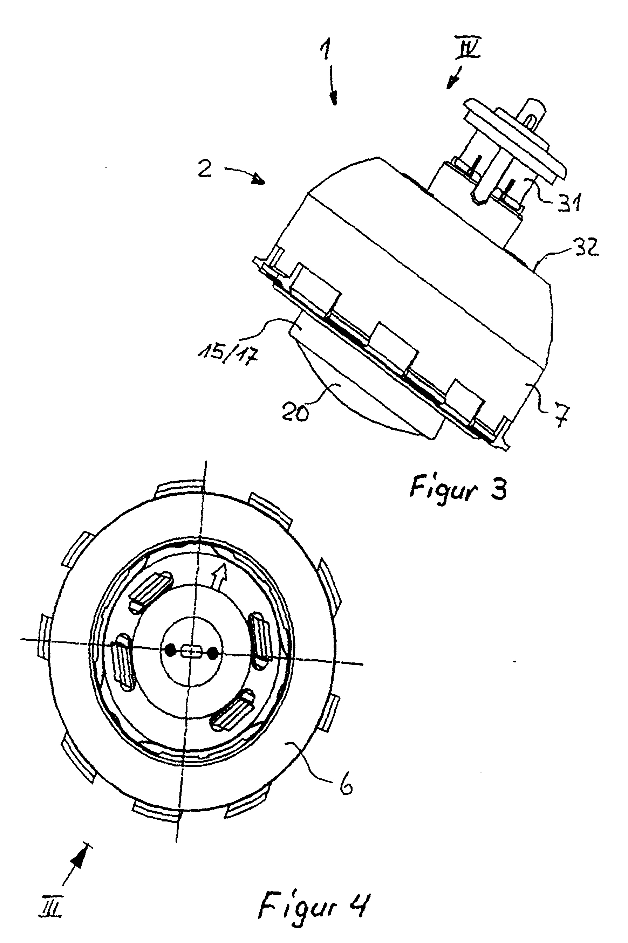

- Figur 3:: eine Seitenansicht einer Leseleuchte in verkleinerter Darstellung, ohne Kühlkörper, Feder und Schale,
- Figur 4:: eine Rückansicht der Leseleuchte von Figur 3 aus Richtung IV, ohne Kühlkörper und Stecker,

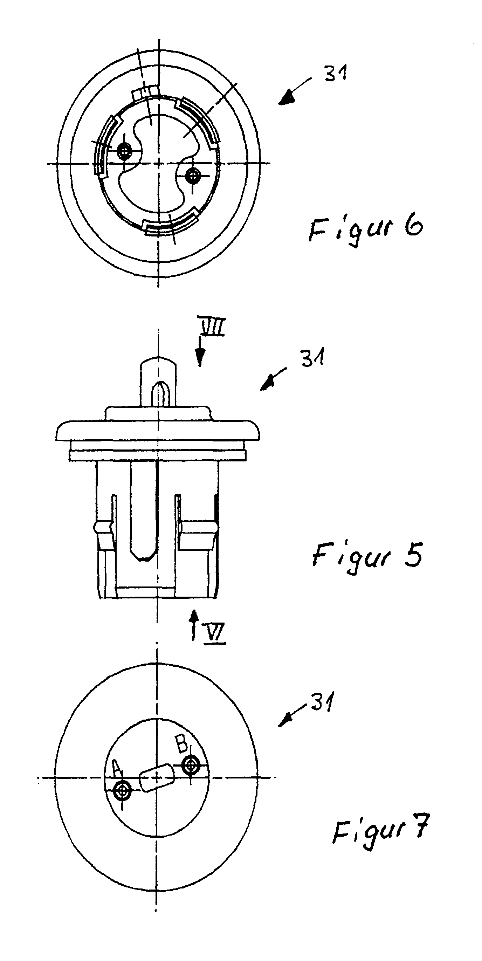

- Figur 5:: eine Seitenansicht eines Steckers,
- Figur 6:: eine Untersicht unter den Stecker von Figur 5 aus Richtung VI,
- Figur 7:: eine Draufsicht auf den Stecker von Figur 5 aus Richtung VII,

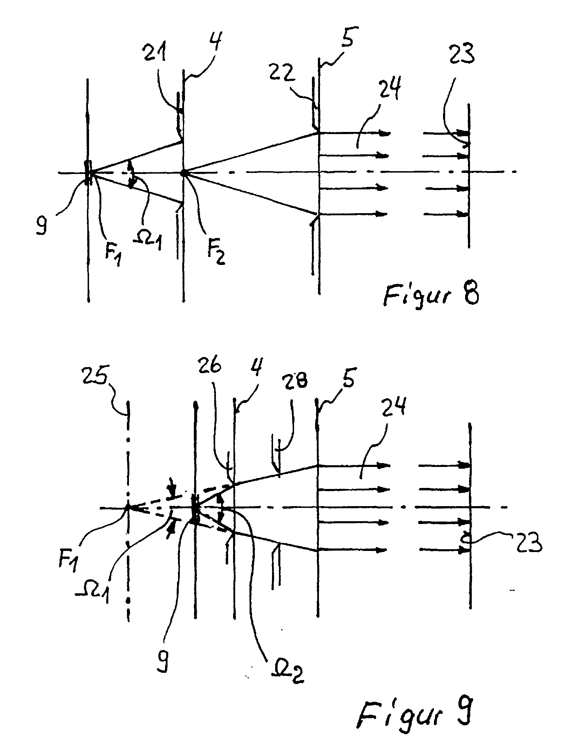

- Figur 8:: einen schematischen Strahlengang einer Leseleuchte mit einer Leuchtdiode im Brennpunkt der ersten Linse und
- Figur 9:: eine schematische Darstellung eines Strahlenganges einer Leseleuchte mit hinter einer Leuchtdiode angeordneten Brennpunkt der ersten Linse.

Eine Leseleuchte 1 besteht im Wesentlichen aus einem Leuchtengehäuse 2, einer Lichtquelle 3, einer ersten Linse 4 und einer zweiten Linse 5.

Das Leuchtengehäuse 2 besteht aus einem kugelförmigen Leuchtenkörper 6, der schwenkbar in einer Schale 7 gehaltert ist.

Der Leuchtenkörper 6 weist an seinem rückwärtigen Ende 8 die Lichtquelle 3 auf, die als Leuchtdiode 9 ausgebildet ist. In Abstrahlrichtung 10 ist der Leuchtdiode 9 eine Blende 11 vorgelagert. Koaxial zur Leuchtdiode 9 ist ein Farbfilter 12 angeordnet, der als Filterring 13 ausgebildet ist. Die erste Linse 4 wird von einer an den Leuchtenkörper 6 angeformten Linsenfassung 14 der Leuchtdiode 9 und dem Filterring 13 vorgelagert gehaltert. Die erste Linse 4 ist als Sammellinse, vorzugsweise als Plankonvexlinse mit einer Freiformfläche ausgebildet, deren erster Brennpunkt F₁ entgegengesetzt zur Abstrahlrichtung 10 hinter der Leuchtdiode 9 angeordnet ist. Es ist aber auch möglich, die Leuchtdiode 9 bzw. ihre Blende 11 direkt im ersten Brennpunkt F₁ anzuordnen.

Der Leuchtenkörper 6 weist einen Tubus 15 auf, dessen rückwärtiges Ende 16 in die Linsenfassung 14 übergeht und an dessen dem rückwärtigen Ende 16 abgewandten freien Ende 17 der ersten Linse 4 vorgelagert die zweite Linse 5 in einem Absatz 18 gehaltert wird. Nach einem ersten Ausführungsbeispiel ist die zweite Linse 5 als eine Fresnellinse 19 ausgebildet. Nach einem zweiten Ausführungsbeispiel ist die zweite Linse 5 als eine Bikonvexlinse 20 ausgebildet.

Bei einer Anordnung der Leuchtdiode 9 im Brennpunkt F₁ der ersten Linse 4 liegt die Öffnungsblende 21 bzw. Aperturblende in der Ebene der ersten Linse 4. Dabei wird von der Öffnungsblende ein Öffnungswinkel Ω₁ gebildet. Die erste Linse 4 ist dabei im zweiten Brennpunkt F₂ der zweiten Linse 5 angeordnet, in deren Ebene sich die Feldblende 22 befindet. Eine zu beleuchtende Fläche 23 wird somit von parallelem Licht 24 mit weitgehend gleicher Lichtintensität über die Fläche beleuchtet. Soweit der Brennpunkt F₁ der ersten Linse 4 hinter der Leuchtdiode 9 angeordnet ist, bildet sich im Brennpunkt F₁ eine virtuelle Objektebene 25 mit einem virtuellen Öffnungswinkel Ω₁ und einer Feldblende 26 in der Ebene der ersten Linse 4 und einem reellen Öffnungswinkel Ω₂, der viel größer als der virtuelle Öffnungswinkel Ω₁ ist, wobei sich die Öffnungsblende 28 in Richtung zweiter Linse 5 verschiebt, so dass sie entsprechend größer wird und die Effizienz des Lichtsystems gesteigert wird. Insbesondere in Verwendung mit der Bikonvexlinse 20 kann die Lichtverteilung der beleuchteten Fläche im Kern ihr Maximum haben und zu den Rändern hin abnehmen.

Die Leuchtdiode 9 weist ein Gehäuse 29 mit zwei Pins 30 als elektrischen Kontakten auf, über die ein Stecker 31 zur elektrischen Kontaktierung steckbar ist. Der Stecker 31 ist dabei so ausgebildet, dass er das Leuchtengehäuse 2 an seiner Rückseite 32 gegen Staub und Feuchtigkeit abdichtet. Gleichzeitig bildet der Stecker 31 einen Verdrehschutz zu einem auf der Rückseite 32 des Leuchtengehäuses 2 angeordneten Kühlkörper 33.

## Patentansprüche

1. Leseleuchte für einen Fahrzeuginnenraum mit einer in einem Leuchtengehäuse angeordneten Lichtquelle und einer der Lichtquelle in Abstrahlrichtung vorgelagerten Linse, **dadurch gekennzeichnet, dass** die Linse als zweite Linse (5) eines Linsensystems ausgebildet ist, das zwischen der Lichtquelle (3) und der zweiten Linse (5) eine erste Linse (4) aufweist.

2. Leseleuchte nach Anspruch 1, **dadurch gekennzeichnet, dass** die Lichtquelle (3) als eine Leuchtdiode (9) ausgebildet ist.

3. Leseleuchte nach Anspruch 1 oder 2, **dadurch gekennzeichnet, dass** die Lichtquelle (3) etwa im Brennpunkt F₁ der ersten Linse (4) angeordnet ist.

4. Leseleuchte nach Anspruch 1 oder 2, **dadurch gekennzeichnet, dass** die Lichtquelle (3) zwischen dem Brennpunkt F₁ der ersten Linse (4) und der ersten Linse (4) angeordnet ist.

5. Leseleuchte nach einem der Ansprüche 1 bis 4, **dadurch gekennzeichnet, dass** die erste Linse (4) als Sammellinse ausgebildet ist.

6. Leseleuchte nach Anspruch 5, **dadurch gekennzeichnet, dass** die Sammellinse als eine Plankonvexlinse mit Freiformfläche ausgebildet ist.

7. Leseleuchte nach einem der Ansprüche 1 bis 6, **dadurch gekennzeichnet, dass** die zweite Linse (5) als Fresnellinse (19) ausgebildet ist.

8. Leseleuchte nach einem der Ansprüche 1 bis 6, **dadurch gekennzeichnet, dass** die zweite Linse (5) als Bikonvexlinse (20) ausgebildet ist.

9. Leseleuchte nach einem der Ansprüche 2 bis 8, **dadurch gekennzeichnet, dass** die Leuchtdiode (9) ein Gehäuse (29) mit zwei Pins (30) als elektrischen Kontakten aufweist, über die ein Stecker (31) zur elektrischen Kontaktierung steckbar ist.

10. Leseleuchte nach Anspruch 9, **dadurch gekennzeichnet, dass** der Stecker (31) das Leuchtengehäuse (2) an seiner Rückseite (32) abdichtet.
